# EUROPEAN PATENT APPLICATION

(11) **EP 3 909 673 A1**
(43) Date of publication of application: **17.11.2021**
(21) Application number: 20174023.0
(22) Date of filing: 12.05.2020
(51) Int. Cl.: B01J 19/02, B01J 19/24, C01C 1/18

(54) **PROCESS FOR MAKING AMMONIUM NITRATE**

(71) Applicant: CASALE SA, 6900 Lugano (CH)
(72) Inventor: CEREA, Iacopo, 6900 Lugano (CH); FILIPPI, Ermanno, 6976 Castagnola (CH); PEDON, Flavio, 21034 Cocquio Trevisago (VA) (IT); TALARICO, Pasquale, 6962 Viganello (CH)
(74) Representative: M. Zardi & Co S.A.

(57) **Abstract**

A process of making ammonium nitrate from nitric acid and ammonia in a tubular reactor internally coated with a ceramic coating.

## Description

### Field of the invention

The present invention refers to a process for making ammonium nitrate wherein nitric acid and ammonia react in a tubular reactor for producing the ammonium nitrate.

### Prior Art

Ammonium nitrate is produced conventionally by reacting nitric acid and ammonia. Nitric acid is normally produced with the process known as Ostwald process.

The reaction of nitric acid and ammonia is often performed in a so-called ammonium nitrate pipe reactor. This reactor is basically a tubular reactor where an aqueous solution of nitric acid and ammonia are introduced and the formation of the ammonium nitrate takes place.

The term tubular reactor is known in the art. This term identifies a reactor designed to avoid backflow mixing and operate essentially in a plug-flow regime. A tubular reactor is normally realized as an elongated tube or pipe wherein the terminal part of the tubular reactor is discharging the resulting ammonium nitrate solution in a separator vessel.

The ammonium nitrate pipe reactor is generally made of stainless steel. Due to high aggressive conditions including high fluid velocity, corrosive reagents and a bi-phase flow, the ammonia pipe reactor show a remarkable corrosion rate of around 1-2 mm / month. This forces the pipe reactor to be designed with a large thickness to ensure an industrially acceptable life. However a large thickness means an increased cost and weight of the reactor.

In the current state of the art, the ammonium nitrate pipe reactor is typically made of high-grade steel or a special alloy. Other materials such as Titanium or Zirconium may withstand corrosion but are expensive and may be difficult to weld. Despite the use of such high-grade steel the replacements or stops for maintenance are relatively frequent. The replacement of the pipe reactor involves a shut-down with related loss of production as well as the cost for the new reactor or for replacement of internals.

Therefore there is a demand from the producers of ammonium nitrate for a solution to the problem of the high corrosion suffered by the ammonia nitrate pipe reactor.

### Summary of the invention

The applicant has discovered that the failure of ammonium nitrate pipe reactors is caused predominantly by erosion of the internal surface. Water contained in the diluted nitric acid is vaporized by the large heat generated by the reaction. This increases the volumetric flow leading to a high-speed, two-phase flow (possibly approaching the speed of sound) which rapidly erodes the passivated layer of the internal surface of the pipe reactor. This erosion may be predominant over direct acid corrosion of steel.

The idea underlying the invention is to provide the ammonium nitrate pipe reactor with an internal anti-friction ceramic coating to reduce the adhesion of particles and, consequently, reduce this effect of erosion. The ceramic coating material is preferably harder than the base material of the coated surface reducing further the erosion effect. The ceramic coating is made of technical ceramics, also known as high-performance ceramics. The ceramic coating is provided on the inner surface of the pipe reactor in contact with the nitric acid and ammonia.

Accordingly the invention provides a process of making ammonium nitrate comprising introducing nitric acid and ammonia in a tubular reactor and withdrawing a solution containing ammonium nitrate from the tubular reactor, wherein the tubular reactor is made of a metal material and has an internal ceramic coating.

The nitric acid may be introduced in the form of an aqueous solution of nitric acid. The nitric acid may be produced upstream with the Ostwald process.

The internal coating of said tubular reactor may be uniform or not according to various embodiments of the invention. The entire surface of the inside of the reactor may be coated, or only a selected portion thereof. The thickness of the coating may be uniform or differentiated according to some embodiments.

The inner coating of the invention is able to reduce the friction factor on the internal surface, to minimize the erosion. Accordingly, the life of the pipe reactor can be extended. Preferably the inner coating has also a high hardness.

### Preferred embodiments

Preferred ceramic materials include: Titanium nitride, Chromium carbide, Hafnium carbide, Hafnium carbide, silicon carbide, tantalum carbide, zirconium carbide; oxides of any of Hafnium, Zirconium, Aluminum, Silica and Tantalum; combinations of the above materials. The ceramic coating may include, or be made of, any of the above materials and combinations thereof.

The internal coating has a surface roughness which is smaller than the surface roughness of the uncoated internal surface of the tubular reactor. Preferably the surface roughness of the coating is not greater than 0.20 times the surface roughness of the uncoated internal surface, more preferably not greater than 0.10 times. Preferably the surface roughness of the coating is to 0.20 to 0.01 and more preferably 0.10 to 0.01 times the roughness of the uncoated surface.

The reduced roughness will limit the product particle adhesion to the internal surface of the reaction and enforce the erosion resistance of the equipment.

The surface roughness may be determined according to the ISO 4287:1997 standard as arithmetical mean deviation of the assessed profile, commonly denoted with the symbol Ra.

The hardness of the ceramic coating may be greater than the hardness of the uncoated material of the pipe reactor. The surface hardness of the ceramic is preferably at least 3 times and more preferably 3 to 6 times the hardness of the uncoated internal surface of the tubular reactor.

The internal coating may be provided on the entire inside surface of the tubular reactor, or only a portion thereof.

The thickness of the internal coating may be constant or suitably differentiated.

The internal coating may be arranged to provide increased protection to selected critical regions found to be more exposed to the above described erosion. This increased protection may be the result of the presence itself of the internal coating in partial coating embodiments, and/or of an increased thickness of the coating.

The internal ceramic coating is provided, in a preferred embodiment, at least from an inlet point where ammonia and nitric acid are introduced, to an outlet point where the ammonium nitrate solution is withdrawn from the reactor. The inlet point and outlet point may be an inlet flange and outlet flange, respectively.

In other embodiments the coated portion may be determined in terms of the length of the coated portion compared to the inner diameter of the tubular reactor. In a preferred embodiment the coated portion extends from the above mentioned inlet point (e.g. inlet flange) over a length between 2 to 40 times the inner diameter and more preferably between 4 to 35 times the inner diameter.

A variable thickness of the internal coating may be provided in some embodiments. In a preferred embodiment an increased thickness of ceramic coating is provided over a determined length starting from said inlet point of the tubular reactor. Said length is more preferably 2 to 40 times the inner diameter of the tubular reactor, particularly preferably 4 to 35 times the inner diameter.

The thickness of the coating is preferably 30 to 300 microns. Also in embodiments with variable thickness, the variable thickness may be comprised in the above range.

The tubular reactor may be made of steel, preferably austenitic steel.

The coating may be provided with a mechanical, physical or chemical deposition process.

The ceramic coating may be chemically bonded to the internal surface of the tubular reactor. For example the ceramic coating may be chemically bonded to the stainless steel over the internal surface of the tubular reactor.

The tubular reactor may have the shape of an elongated tube or elongated pipe. Accordingly the length of the tubular reactor is several times greater than its diameter. The size of the tubular reactor may be defined in terms of the ratio between length and diameter, e.g. the inner diameter. In a preferred embodiment the tubular reactor has a ratio L/D of length over inner diameter which is comprised between 20 and 100. More preferably said ratio L/D is 35 to 65.

The specific mass flow in the tubular reactor may be 80 to 300 kg/h per cm² of the cross section.

Another aspect of the invention is an ammonium nitrate pipe reactor, for use in the production of ammonium nitrate by reacting nitric acid and ammonia, said reactor being a tubular reactor made of a metal material and having an internal ceramic coating.

All the above described preferred embodiments are applicable to the pipe reactor. An ammonium nitrate pipe reactor with features recited in the attached claims is also disclosed.

## Claims

1. A process of making ammonium nitrate comprising introducing nitric acid and ammonia in a tubular reactor and withdrawing a solution containing ammonium nitrate from the tubular reactor, wherein the tubular reactor is made of a metal material and has an internal coating which is a ceramic coating.

2. A process according to claim 1, wherein the ceramic coating includes or is made of any of the following: ttitanium nitride, chromium carbide, hafnium carbide, hafnium carbide, silicon carbide, tantalum carbide, zirconium carbide; oxides of any of Hafnium, Zirconium, Aluminium, Silica and Tantalum; combinations thereof.

3. A process according to any of the previous claims, wherein the ceramic coating has a roughness which is not greater than 0.20 times the roughness of the uncoated internal surface of the tubular reactor, preferably in the range 0.10 to 0.01.

4. A process according to any of the previous claims, wherein the hardness of said ceramic coating is greater than the hardness of the uncoated internal surface of the tubular reactor, preferably at least 3 times greater and more preferably 3 to 6 times greater.

5. A process according to any of the previous claims wherein the internal coating is provided on the entire inner surface of the tubular reactor, or only a portion thereof.

6. A process according to any of the previous claims, wherein said internal coating is provided at least from an inlet point where nitric acid and ammonia are introduces, to an outlet point where the solution containing ammonium nitrate is withdrawn, or said internal coating is provided on a coated portion of the pipe reactor starting from said inlet point and the coated portion has a length of 2 to 40 times the inner diameter of the reactor, preferably 4 to 35 times.

7. A process according to any of the previous claims, wherein the thickness of the ceramic coating is constant in the tubular reactor, or selected regions of the internal surface of the tubular reactor have a differentiated thickness of coating.

8. A process according to any of the previous claims, wherein an increased thickness of the ceramic coating is provided over a portion starting from a point of introduction of ammonia and nitric acid and having a length of 2 to 40 times the inner diameter of the reactor, preferably between 4 and 35 times.

9. A process according to any of the previous claims wherein the thickness of the coating is 30 to 300 microns.

10. A process according to any of the previous claims, wherein the tubular reactor is made of steel, preferably austenitic steel.

11. A process according to any of the previous claims wherein the ceramic coating is chemically bonded to the internal surface of the tubular reactor.

12. A process according to any of the previous claims, wherein the tubular reactor has the shape of an elongated tube or elongated pipe, preferably having a ratio between the length and the inner diameter which is in the range 20 to 80 and more preferably in the range 35 to 65.

13. A process according to any of the previous claims wherein the specific mass flow in the tubular reactor is 80 to 300 kg/h per cm² of the cross section.

14. An ammonium nitrate pipe reactor, for the production of ammonium nitrate by reacting nitric acid and ammonia, said reactor being a tubular reactor made of a metal material and having an internal ceramic coating.
